# FASCICULE DE BREVET EUROPEEN

(11) **EP 0 487 362 B1**
(45) Date de publication et mention de la délivrance du brevet: **07.07.1993**
(21) Numéro de dépôt: 91402665.3
(22) Date de dépôt: 07.10.1991
(51) Int. Cl.: F28D 1/04, B60K 11/04

(54) **Dispositif de fixation d'un échangeur de chaleur secondaire du type à serpentin sur un échangeur de chaleur principal et ensemble d'échangeurs ainsi obtenu**
Befestigung eines Sekundärwärmeaustauschers, insbesondere mit Spiralen auf einen Hauptwärmeaustauscher und derart hergestellte Wärmeaustauscheranordnung
Fixation of a secondary heat-exchanger, particularly with spirals, on a primary heat-exchanger and a heat-exchange assembly thus produced

(30) Priorité: 12.10.1990 FR 9012642
(43) Date de publication de la demande: 27.05.1992
(73) Titulaire: VALEO THERMIQUE MOTEUR, 78320 Le Mesnil Saint-Denis (FR)
(72) Inventeur: Le Gauyer, Philippe, F-75019 Paris (FR)
(74) Mandataire: Gamonal, Didier

(56) Documents cités:
- EP-A- 0 367 078
- DE-A- 3 922 814
- FR-A- 2 640 207
- GB-A- 2 149 042
- US-A- 4 190 105

## Description

L'invention concerne un dispositif de refroidissement comprenant un échangeur de chaleur principal et un échangeur de chaleur secondaire du type à serpentin selon le préambule de la revendication 1. Un tel dispositif est connu par le FR-A-2 640 207.

Il est connu de fixer sur un radiateur de refroidissement d'un véhicule automobile un autre échangeur de chaleur qui peut être, par exemple, un condenseur d'une installation de climatisation ou encore un radiateur secondaire basse température destiné à alimenter un radiateur pour le refroidissement de l'air de suralimentation du moteur.

L'échangeur de chaleur principal et l'échangeur de chaleur secondaire sont disposés dans des plans généralement parallèles de sorte que l'air frais prélevé à l'extérieur de l'habitacle du véhicule puisse refroidir à la fois le fluide circulant dans l'échangeur de chaleur principal et le fluide circulant dans le serpentin de l'échangeur de chaleur secondaire.

Le fluide circulant dans l'échangeur de chaleur principal est alors constitué par le liquide de refroidissement du moteur, tandis que le fluide circulant dans le serpentin peut être un fluide frigorigène dans le cas d'un condenseur, ou le même liquide de refroidissement dans le cas d'un radiateur secondaire basse température destiné à alimenter un radiateur de refroidissement d'air de suralimentation.

Le serpentin de l'échangeur de chaleur secondaire est habituellement constitué par des tronçons de tubes parallèles reliés deux à deux par des coudes en U, encore appelés crosses. Les tronçons de tubes et les coudes peuvent être à section ronde ou encore à section aplatie et comporter des ailettes de refroidissement.

La fixation de l'échangeur de chaleur secondaire sur l'échangeur de chaleur principal est généralement réalisée au moyen de plots élastiques, par exemple au nombre de quatre, ou comme décrit dans les documents FR-A-2 640 207 ou GB-A-2 149 042 par des entretoises ayant une forme symétrique autour d'un axe de révolution, qui sont reliés d'une part à des coudes du serpentin et d'autre part à des points de fixation de l'échangeur de chaleur principal, par exemple sur les boîtes à eau de celui-ci.

Comme ces échangeurs sont fabriqués en grande série et sujets à des variations dimensionnelles, il arrive souvent que les points de fixation d'un échangeur de chaleur principal donné ne coïncident pas exactement avec les emplacements correspondants prévus sur le serpentin de l'échangeur de chaleur secondaire qui lui est destiné, ce qui pose des problèmes de fixation.

Dans le document GB-A-2 149 042, il est prévu un excentrique porté par une tige introduite dans un perçage réalisé par exemple dans un mur, ledit excentrique étant disposé entre deux rondelles et coopérant avec l'ouverture de la paroi pour ajuster cette paroi par rapport au perçage, ladite ouverture ayant une dimension diamétrale égale au moins à deux fois le mouvement radial de l'excentrique.

Il en résulte que l'excentrique est en contact avec l'intérieur de l'ouverture uniquement le long d'une ligne et le rattrapage ne peut se faire que dans une seule direction.

L'invention a notamment pour but de remédier à cet inconvénient.

Elle propose à cet effet un dispositif de refroidissement comprenant un échangeur de chaleur principal et un échangeur de chaleur secondaire du type à serpentin comportant des tronçons des tronçons de tubes reliés deux à deux par des coudes en U et au moins une entretoise ayant une forme symétrique autour d'un axe de révolution et adaptée à celle du coude en U.

Selon une caractéristique essentielle de l'invention le dispositif de refroidissement est caractérisé en ce que ladite entretoise présente un axe de fixation disposé parallèle et excentré par rapport à l'axe de révolution et sert à la fixation de l'entretoise sur un point de fixation associé de l'échangeur de chaleur principal, si bien que l'orientation angulaire de l'entretoise autour de son axe de fixation peut être ajustée pour compenser un éventuel défaut d'alignement entre le coude en U et le point de fixation associé.

Ainsi, conformément à l'invention, il est possible d'ajuster l'orientation angulaire de chacune des entretoises utilisées pour la fixation du serpentin et compenser ainsi les défauts d'alignement entre les point de fixation de l'échangeur de chaleur principal et les coudes correspondants du serpentin, l'entretoise possède une forme qui est symétrique autour autour d'un axe de révolution et qui s'adapte à celle du coude en U. Il en résulte que l'entretoise est en contact avec tout le contour interne du coude en U, si bien que le rattrapage peut se faire dans toutes les directions.

Dans une forme de réalisation préférée de l'invention, l'entretoise comprend un alésage disposé suivant l'axe de fixation et débouchant sur deux faces d'extrémité de ladite entretoise, le dispositif comprenant en outre un organe de fixation propre à d'adapter sur le point de fixation et à traverser l'alésage de l'entretoise.

Ainsi, après réglage de la position angulaire de l'entretoise, il est possible de la maintenir dans cette position grâce à l'organe de fixation.

Ce dernier est avantageusement un ensemble vis-écrou, la vis comprenant une tête propre à être reliée à un point de fixation de l'échangeur de chaleur principal et une tige filetée propre à être traversée par l'alésage de l'entretoise.

Dans une forme de réalisation préférée de l'invention, l'une des faces d'extrémité de l'entretoise constitue une face d'appui sur le point de fixation de l'échangeur de chaleur principal, tandis que l'autre face d'extrémité se prolonge par une collerette pour permettre la retenue du coude en U.

Ainsi, dans le cas où l'échangeur de chaleur principal comporte deux boîtes à eau, le serpentin est relié à chacune des boîtes à eau par deux dispositifs de fixation.

Bien entendu, il est possible de fixer également un serpentin sur un échangeur de chaleur principal comportant une seule boîte à eau. En ce cas, la fixation du serpention peut s'effectuer sur la boîte à eau à l'aide de deux dispositifs selon l'invention.

L'ensemble d'échangeurs précité peut comporter en outre, d'une manière en soi connue, un support d'un groupe motoventilateur.

En ce cas, les dispositifs de fixation de l'invention permettent également la fixation du support du groupe motoventilateur.

Dans la description qui suit, donnée seulement à titre d'exemple, on se réfère au dessin annexé, sur lequel :
- la figure 1 est une vue en élévation d'un ensemble d'échangeurs comprenant un échangeur de chaleur principal et un échangeur de chaleur secondaire à serpentin fixé à celui-ci au moyen de quatre dispositifs de fixation selon l'invention ;
- la figure 2 est une vue en coupe partielle et à échelle agrandie selon la ligne II-II de la figure 1 ;
- la figure 3 est une vue partielle, à échelle agrandie, d'une partie de l'ensemble d'échangeurs de la figure 1 ;
- la figure 4 est une vue en coupe partielle selon la ligne IV-IV de la figure 3 ;
- la figure 5 est une vue en élévation d'un ensemble d'échangeurs analogues à celui de la figure 1 et comprenant en outre un support d'un groupe motoventilateur ; et
- la figure 6 est une vue en coupe suivant la ligne VI-VI de la figure 5.

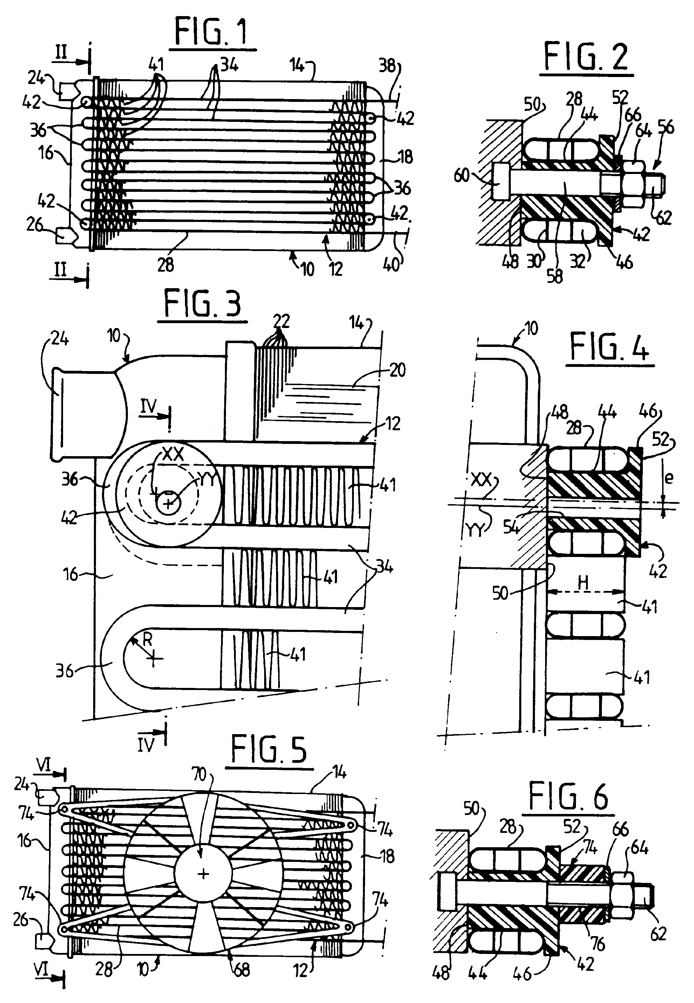

L'ensemble d'échangeurs représenté à la figure 1 comprend un échangeur de chaleur principal 10, tel qu'un radiateur de refroidissement d'un moteur à combustion interne de véhicule automobile et un échangeur de chaleur secondaire 12 du type à serpentin. Dans l'exemple, ce dernier est un condenseur faisant partie d'une installation de climatisation du véhicule automobile.

L'échangeur de chaleur principal 10 comprend, de façon en soi connue, un faisceau 14 interposé entre deux boîtes à eau 16 et 18. Le faisceau 14 est formé d'une multiplicité de tubes 20 traversant une multiplicité d'ailettes 22 (figure 3). La boîte à eau 16 est munie de deux tubulures 24 et 26 servant à l'entrée et à la sortie du liquide de refroidissement traversant l'échangeur de chaleur 10.

L'échangeur de chaleur secondaire 12 comprend un serpentin 28 constitué, dans l'exemple, d'un tube de section aplatie, muni intérieurement de deux cloisons 30 et 32 (figure 2). Le serpentin 28 comprend des tronçons de tube 34 parallèles entre eux reliés deux à deux par des coudes en U 36, encore appelés crosses. Le serpentin 28 est, dans l'exemple, obtenu à partir d'une seule longueur de tube qui comprend une entrée 38 et une sortie 40 (figure 1). Le serpentin 28 affecte ainsi une forme générale rectangulaire dont la longueur et la largeur sont respectivement inférieurs à la longueur et la largeur de l'échangeur de chaleur principal 10. Les tronçons de tube 34 sont reliés deux à deux par des ailettes de refroidissement 41 ayant sensiblement la forme de sinusoïdes.

Comme montré à la figure 1, le serpentin 28 est relié par quatre entretoises 42 à l'échangeur de chaleur principal 10, à savoir deux entretoises 42 reliées à la boîte à eau 16 et deux autres entretoises 42 reliées à la boîte à eau 18.

Chaque entretoise 42 présente une forme symétrique autour d'un axe de révolution XX (figure 4). Dans l'exemple, l'entretoise 42 comprend un corps cylindrique 44, dont le rayon correspond sensiblement au rayon interne R d'un coude 36, et une collerette cylindrique 46 dont le rayon est supérieur à celui du corps cylindrique 44. L'entretoise 42 comporte une face d'extrémité 48 propre à prendre appui sur un bossage 50 de la boîte à eau 16 ou 18 et une face d'extrémité opposée 52 située du côté de la collerette cylindrique 46. La hauteur H (figure 4) du corps cylindrique 44 (comprise entre le face d'appui 48 et la collerette 46 correspond sensiblement à la plus grande dimension de la section du serpentin 28. Dans ces conditions, la collerette 46 permet de retenir le coude 36 correspondant en appui sur le bossage 50 de la boîte à eau.

L'entretoise 42 comporte par ailleurs un alésage 54 disposé suivant un axe YY qui est parallèle et excentré par rapport à l'axe XX (figure 4). L'axe XX et l'axe YY sont séparés par un espace e (figures 3 et 4) permettant de compenser un éventuel défaut d'alignement entre le coude en U et le bossage correspondant de la boîte à eau.

Comme montré à la figure 2, l'entretoise 42 est fixée sur le bossage 50 au moyen d'un organe de fixation 56. Celui-ci comprend une vis 58 munie d'une tête 60 destinée à être insérée dans le bossage 50 et d'une tige filetée 62 propre à recevoir un écrou 64 avec interposition d'une rondelle 66. Les boîtes à eau 16 et 18 sont avantageusement réalisées en matière plastique et comportent alors chacune deux bossages 50 venus de moulage. Ces bossages définissent ainsi des points de fixation pour les quatre entretoises 42 représentées à la figure 1.

Pour fixer le serpentin 28 sur l'échangeur de chaleur 10, on met d'abord en place les quatre vis 58 sur leurs bossages respectifs 50, puis on présente le serpentin 28 qui a reçu au préalable les quatre entretoises 42 dans les coudes 36 prévus à cet effet. Chacune des entretoises 42 est introduite par son alésage 54 sur la vis 58 correspondante. Chacune des entretoises peut être réglée angulairement en position, indépendamment des autres, pour compenser les éventuels défauts d'alignement entre le coude en U et le point de fixation associé. Il suffit ensuite de serrer définitivement les écrous 64 pour maintenir la position angulaire de chacune des entretoises.

Ainsi, dans la forme de réalisation des figures 1 à 4, le serpentin 28 peut être relié à l'échangeur de chaleur principal 10 en compensant les éventuels défauts d'alignement résultant des disparités de fabrication des deux échangeurs.

Dans la forme des réalisations des figures 5 et 6, auxquelles on se réfère maintenant, l'ensemble des deux échangeurs 10 et 12 comprend en outre un support 68 pour un groupe motoventilateur 70. Ce support comprend quatre bras de fixation 72 terminés chacun par une extrémité 74. La position respective des quatre extrémités 74 correspond sensiblement à la position des quatre points de fixation, c'est-à-dire des quatre bossages 50 de l'échangeur de chaleur principal 10. Chacune des extrémités 74 comporte un alésage 76 susceptible d'être traversé par la tige filetée 72 d'une vis 58. Ainsi, chaque vis 58 reçoit successivement une entretoise 42, une extrémité 74, une rondelle 66 et un écrou 64.

Bien entendu, l'invention est susceptible de nombreuses variantes de réalisation. Ainsi, le serpentin 28 pourrait être réalisé à partir d'un tube de section circulaire. En pareil cas, le corps de l'entretoise 42 devra comporter, non pas des génératrices rectilignes, mais des génératrices incurvées.

Par ailleurs, le serpentin 28 peut faire partie non pas d'un condenseur d'une installation de climatisation mais d'un radiateur secondaire basse température destiné à alimenter un radiateur de refroidissement de l'air de suralimentation d'un moteur. En ce cas, c'est le même liquide de refroidissement qui parcourt à la fois l'échangeur de chaleur principal 10 et le serpentin 28.

## Revendications

1. Dispositif de refroidissement comprenant un échangeur de chaleur de chaleur principal (10) et un échangeur de chaleur secondaire (12) du type à serpentin (28) comportant des tronçons de tubes (34) reliés deux à deux par des coudes en U (36) et au moins une entretoise (42) ayant une forme symétrique autour d'un axe de révolution (XX) et adaptée à celle du coude en U (36), caractérisé en ce que ladite entretoise (42) présente un axe de fixation (YY) disposé parallèle et excentré par rapport à l'axe de révolution (XX) et sert à la fixation de l'entretoise (42) sur un point de fixation associé (50) de l'échangeur de chaleur principal (10), si bien que l'orientation angulaire de l'entretoise (42) autour de son axe de fixation (YY) peut être ajustée pour compenser un éventuel défaut d'alignement entre le coude en U (36) et le point de fixation (50) associé.

2. Dispositif selon la revendication 1, caractérisé en ce que l'entretoise (42) comprend un alésage (54) disposé suivant l'axe de fixation (YY) et débouchant sur deux faces d'extrémité (48,52) et en ce que le dispositif comprend en outre un organe de fixation (56) propre à s'adapter sur le point de fixation (50) et à traverser l'alésage (54) de l'entretoise (42).

3. Dispositif selon la revendication 2, caractérisé en ce que l'organe de fixation (56) comprend une vis (58) et un écrou (64), la vis comprenant une tête (60) propre à être reliée au point de fixation (50) et une tige filetée (62) propre à traverser l'alésage (54) de l'entretoise (42).

4. Dispositif selon la revendication 2, caractérisé en ce que l'une (48) des faces d'extrémité de l'entretoise (42) constitue une face d'appui sur le point de fixation (50), tandis que l'autre face d'extrémité (52) se prolonge par une collerette (46) formant retenue pour le coude en U (36).

5. Dispositif selon l'une des revendications 1 à 4, dans lequel l'échangeur de chaleur principal (10) comporte deux bottes à eau (16,18), caractérisé en ce que le serpentin (28) est relié à chacune des bottes à eau par deux entretoises (42).

6. Dispositif selon l'une des revendications 1 à 5, comportant en outre un support (68) d'un groupe motoventilateur, caractérisé en ce que les entretoises (42) assurent également la fixation du support (68).

## Patentansprüche

1. Kühlvorrichtung, enthaltend einen Hauptwärmeaustauscher (10) und einen Sekundärwärmeaustauscher (12) mit Spirale (28), enthaltend Rohrabschnitte (34), die jeweils paarweise durch U-Bögen (36) miteinander verbunden sind, und wenigstens ein Zwischenstück (42) von symmetrischer Form um eine Umdrehungsachse (XX) und angepaßt an die Form des U-Bogens (36), **dadurch gekennzeichnet**, daß das genannte Zwischenstück (42) eine im Verhältnis zur Umdrehungsachse (XX) parallel und außermittig angeordnete Befestigungsachse (YY) aufweist und zur Befestigung des Zwischenstücks (42) an einem zugehörigen Befestigungspunkt (50) des Hauptwärmeaustauschers (10) dient, so daß die Winkelausrichtung des Zwischenstücks (42) um die Befestigungsachse (YY) so eingestellt werden kann, daß ein eventueller Ausfluchtungsfehler zwischen dem U-Bogen (36) und dem zugehörigen Befestigungspunkt (50) ausgeglichen wird.

2. Vorrichtung nach Anspruch 1, **dadurch gekennzeichnet**, daß das Zwischenstück (42) eine Bohrung (54) enthält, die längs der Befestigungsachse (YY) angeordnet ist und an zwei Endflächen (48, 52) einmündet, und daß die Vorrichtung weiterhin ein Befestigungsorgan (56) enthält, welches zur Anpassung an den Befestigungspunkt (50) und zum Durchtritt durch die Bohrung (54) des Zwischenstücks (42) geeignet ist.

3. Vorrichtung nach Anspruch 2, **dadurch gekennzeichnet**, daß das Befestigungsorgan (56) eine Schraube (58) und eine Mutter (64) enthält, wobei die Schraube einen Kopf (60) besitzt, der mit dem Befestigungspunkt (50) verbunden werden kann, sowie eine Gewindespindel (62), die durch die Bohrung (54) des Zwischenstücks (42) hindurchtreten kann.

4. Vorrichtung nach Anspruch 2, **dadurch gekennzeichnet**, daß eine (48) der Endflächen des Zwischenstücks (42) eine Auflagefläche am Befestigungspunkt (50) bildet, während die andere Endfläche (52) sich in einem Kragen (46) fortsetzt, der für den U-Bogen (36) als Halterung dient.

5. Vorrichtung nach einem der Ansprüche 1 bis 4, bei der der Hauptwärmeaustauscher (10) zwei Wasserkästen (16, 18) aufweist, **dadurch gekennzeichnet**, daß die Spirale (28) über zwei Zwischenstücke (42) mit jedem der Wasserkästen verbunden ist.

6. Vorrichtung nach einem der Ansprüche 1 bis 5, außerdem enthaltend eine Stütze (68) für einen Lüftersatz, **dadurch gekennzeichnet**, daß die Zwischenstücke (42) ebenfalls der Befestigung der Stütze (68) dienen.

## Claims

1. Cooling apparatus comprising a main heat exchanger (10) and a secondary heat exchanger (12), of the serpentine type (28) comprising lengths of tubes (34) connected in pairs through U bends (36), with at least one spacer (42) having a shape which is symmetrical about an axis of revolution (XX) and which matches the shape of the U-shaped bend (36), characterised in that the said spacer (42) has a fastening axis (YY) disposed parallel to the axis of revolution (XX) but offset with respect thereto, so as to secure the spacer (42) on an associated fastening point (50) of the main heat exchanger (10), in such a way that the angular orientation of the spacer (42) about its fastening axis (YY) can be adjusted so as to compensate for any error in alignment between the U-shaped bend (36) and the associated fastening point (50).

2. Apparatus according to Claim 1, characterised in that the spacer (42) has a bore (54) which is disposed along the fastening axis (YY) and which is open in two end faces (48, 52), and in that the apparatus further includes a fastening member (56) which is adapted to fit on the fastening point (50) and to pass through the bore (54) of the spacer (42).

3. Apparatus according to Claim 2, characterised in that the fastening member (56) comprises a screw (58) and a nut (64), the screw having a head (60) adapted to be fixed to the fastening point (50), together with a threaded shank (62) adapted to pass through the bore (54) of the spacer (42).

4. Apparatus according to Claim 2, characterised in that one (48) of the end faces of the spacer (42) constitutes a face for abutment on the fastening point (50), while the other end face (52) is extended by a collar (46) constituting a retaining means for the U-shaped bend (36).

5. Apparatus according to one of Claims 1 to 4, in which the main heat exchanger (10) includes two water headers (16, 18), characterised in that the serpentine tube (28) is connected to each of the water headers through two spacers (42).

6. Apparatus according to one of Claims 1 to 5, further including a support (68) for a motorised fan unit, characterised in that the spacers (42) also provide fastening for the support (68).
